# EUROPÄISCHE PATENTSCHRIFT

(11) **EP 0 983 315 B1**
(45) Veröffentlichungstag und Bekanntmachung des Hinweises auf die Patenterteilung: **02.08.2006**
(21) Anmeldenummer: 98925565.8
(22) Anmeldetag: 11.05.1998
(51) Int. Cl.: C08K 5/49, C08L 69/00

(54) **FLAMMWIDRIGE HOCHWÄRMEFORMBESTÄNDIGE POLYCARBONAT-FORMMASSEN MIT HOHER FLIESSNAHTFESTIGKEIT**
FLAME-RESISTANT POLYCARBONATE MOULDING MATERIALS WHICH ARE DIMENSIONALLY STABLE AT HIGH TEMPERATURES AND HAVE HIGH FLOW LINE STRENGTH
MATERIAUX A MOULER CONTENANT DU POLYCARBONATE ININFLAMMABLES, DIMENSIONNELLEMENT STABLE AUX TEMPERATURES ELEVEES ET D'UNE GRANDE RESITANCE DE LIGNE DE COULEE

(30) Priorität: 23.05.1997 DE 19721628
(43) Veröffentlichungstag der Anmeldung: 08.03.2000
(73) Patentinhaber: Bayer MaterialScience AG, 51368 Leverkusen (DE)
(72) Erfinder: ECKEL, Thomas, D-41540 Dormagen (DE); BÖDIGER, Michael, D-41539 Dormagen (DE); WITTMANN, Dieter, D-51375 Leverkusen (DE); ALBERTS, Heinrich, D-51519 Odenthal (DE); HORN, Klaus, D-41539 Dormagen (DE)
(86) Internationale Anmeldenummer: PCT/EP1998/002730
(87) Internationale Veröffentlichungsnummer: WO 1998/053002

(56) Entgegenhaltungen:
- EP-A- 0 363 608
- EP-A- 0 594 021
- EP-A- 0 640 655
- EP-A- 0 731 140
- DE-A- 19 547 013

## Beschreibung

Die vorliegende Erfindung betrifft flammwidrige Formmassen aus Polycarbonaten und Pfropfpolymerisaten, die durch eine wirksame Additiv-Kombination aus einer Monophosphorverbindung und einer oligomeren Phosphorverbindung flammwidrig ausgerüstet sind. Die erfindungsgemäßen Formmassen zeichnen sich durch eine hohe Wärmeformbeständigkeit, eine sehr hohe Fließnahtfestigkeit und exzellente Flammwidrigkeit aus.

EP-A 0 174 493 (US-P 4 983 658) beschreibt flammgeschützte, halogenhaltige Polymermischungen aus aromatischem Polycarbonat, styrolhaltigem Pfropfcopolymer, Monophosphaten und einer speziellen Polytetrafluorethylen-Formulierung. Im Brandverhalten und mechanischen Werte-Niveau sind diese Mischungen zwar ausreichend, allerdings können Defizite bei der Fließnahtfestigkeit sowie in der thermischen Beständigkeit auftreten.

In US-P 5 030 675 werden flammwidrige, thermoplastische Formmassen aus aromatischem Polycarbonat, ABS-Polymerisat, Polyalkylenterephthalat sowie Monophosphaten und fluorierten Polyolefinen als Flammschutzadditive beschrieben. Der guten Spannungsrißbeständigkeit und Fließnahtfestigkeit stehen als Nachteile Defizite bei der Kerbschlagzähigkeit sowie ungenügende Thermostabilität bei hohe thermischer Belastung wie z.B. dem Verarbeitungsprozeß gegenüber. Ein weiterer Nachteil ist darin zu sehen, daß zur Erzielung eines wirksamen Flammschutzes relativ hohe Mengen Flammschutzmittel benötigt werden, die die Wärmeformbeständigkeit stark erniedrigen.

Diphosphate sind als Flammschutzadditive bekannt. In JA 59 202 240 wird die Herstellung eines solchen Produktes aus Phosphoroxichlorid, Diphenolen wie Hydrochinon oder Bisphenol A und Monophenolen wie Phenol oder Kresol beschrieben. Diese Diphosphate können in Polyamid oder Polycarbonat als Flammschutzmittel eingesetzt werden.

In EP-A 0 363 608 (= US-P 5 204 394) werden Polymermischungen aus aromatischem Polycarbonat, styrolhaltigem Copolymer und Pfropfcopolymer sowie oligomeren Phosphaten als Flammschutzadditive beschrieben. Diese Mischungen zeigen zwar eine gute Flammwidrigkeit und eine reduzierte Formenbelagsbildung, besitzen aber nicht die für viele Anwendungen geforderte hohe Fließnahtfestigkeit und Flammschutzwirkung. Mit zunehmendem Molekulargewicht der oligomeren Phosphate nimmt die Wirksamkeit bezüglich Flammschutz ab.

In EP-A 0 640 655 werden Formmassen aus Polycarbonat, Styrol-Copolymerisat, ABS-Pfropfpolymerisaten und einer Kombination aus Monophosphaten und oligomeren Phosphaten als Flammschutzmittel beschrieben. Als Nachteil ist auch hier die durch die Styrolcopolymerisate verursachte niedrige Fließnahtfestigkeit zu erwähnen.

Gemäß DE-A 195 47 013 besitzen Formmassen aus Polycarbonat, Pfropfpolymerisat und oligomeren Phosphaten als Flammschutzmittel eine ausgezeichnete Flammwidrigkeit. Monophosphate sind in den erfindungsgemäßen Formmassen nicht enthalten.

In EP-A 0 731 140 werden Polymermischungen aus Polycarbonat, Pfropfpolymerisat und einer Kombination aus Monophosphaten und oligomeren Phosphaten als Flammschutzmittel beschrieben. Diese Mischungen besitzen gute Flammwidrigkeit und gute thermische Stabilität. Nachteilig ist jedoch, daß zur Erzielung eines wirksamen Flammschutzmittel (V-0 bei 1,6 mm Dicke gemäß UL 94 V) mindestens 5 Gew.-Teile der Phosphorverbindung benötigt werden, was negative Auswirkungen auf die Wärmeformbeständigkeit hat.

Überraschenderweise wurde nun gefunden, daß halogenfreie Formmassen aus Polycarbonat, Pfropfpolymerisat und einer Flammschutzadditiv-Kombination aus einer Monophosphorverbindung und einer Phosphorverbindung eine sehr günstige Eigenschaftskombination aus hoher Wärmeformbeständigkeit, gutem mechanischem Niveau (Kerbschlagzähigkeit, Fließnahtfestigkeit) und exzellenter Flammwidrigkeit aufweisen.

Gegenstand der Erfindung sind flammwidrige, thermoplastische Formmassen bestehend aus
A) 70 bis 98 Gew.-Teilen, vorzugsweise 75 bis 98 Gew.-Teilen, besonders bevorzugt 80 bis 98 Gew.-Teilen eines aromatischen Polycarbonats,
B) 0,5 bis 20 Gew.-Teilen, vorzugsweise 1 bis 20 Gew.-Teilen, besonders bevorzugt 2 bis 12 Gew.-Teilen eines Pfropfpolymerisats,
C) 0,5 bis 4 Gew.-Teilen, bevorzugt 0,5 bis 3 Gew.-Teilen einer Mischung aus
C.1) 10 bis 90 Gew.-%, vorzugsweise 12 bis 50, insbesondere 14 bis 40, ganz besonders bevorzugt 15 bis 40 Gew.-%, (bezogen auf die Gesamtmenge C) einer Monophosphorverbindung der Formel (I) 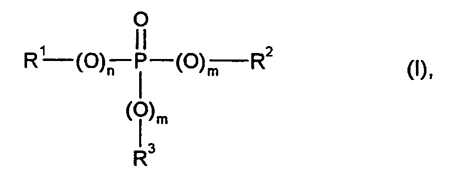 worin
   - R¹, R² und R³: unabhängig voneinander C₁-C₈-Alkyl, C₆-C₂₀-Aryl oder C₇-C₁₂-Aralkyl,
   - m: 0 oder 1 und
   - n: 0 oder 1 bedeuten und
C.2) 90 bis 10 Gew.-%, vorzugsweise 88 bis 50, insbesondere 86 bis 60, ganz besonders bevorzugt 85 bis 60 Gew.-% (bezogen auf die Gesamtmenge C) einer Phosphorverbindung der Formel (II), 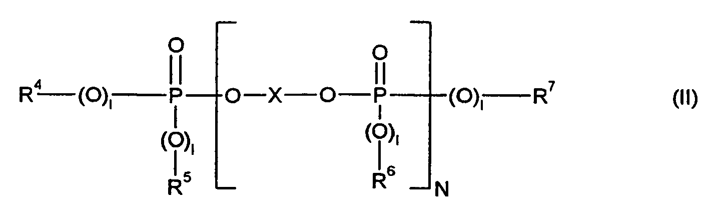 worin
   - R⁴, R⁵, R⁶, R⁷: unabhängig voneinander C₁-C₈-Alkyl, C₅-C₆-Cycloalkyl, C₆-C₁₀-Aryl oder C₇-C₁₂-Aralkyl,
   - 1: unabhängig voneinander 0 oder 1,
   - N: 1 bis 5 und
   - X: einen ein- oder mehrkernigen aromatischen Rest mit 6 bis 30 C-Atomen bedeuten,
D) 0,05 bis 5 Gew.-Teilen, vorzugsweise 0,1 bis 2 Gew.-Teile, besonders bevorzugt 0,1 bis 1 Gew.-Teile eines fluorierten Polyolefins mit einem mittleren Teilchendurchmesser von 0,05 bis 1000 µm, einer Dichte von 1,2 bis 2,3 g/cm³ und einem Fluorgehalt von 65 bis 76 Gew.-% und
E) mindestens einen Zusatzstoff ausgewählt aus der Gruppe der Stabilisatoren Farbstoffe, Pigmente, Gleit- und Entformungsmittel, Full- und Verstärkungsmittel, Nukleiermittel und Antistatika.

### Komponente A

Erfindungsgemäß geeignete, thermoplastische, aromatische Polycarbonate gemäß Komponente A sind solche auf Basis der Diphenole der Formel (III), 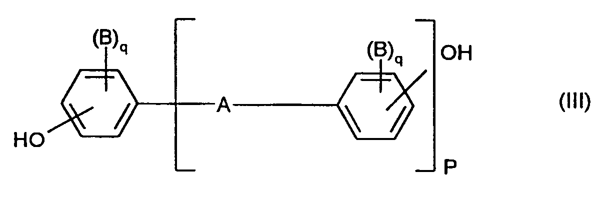 worin
- A: eine Einfachbindung, C₁-C₅-Alkylen, C₂-C₅-Alkyliden, C₅-C₆-Cycloalkyliden, -S- oder -SO₂-,
- B: unabhängig voneinander C₁-C₈-Alkyl, C₆-C₁₀-Aryl, C₇-C₁₂-Aralkyl bedeutet,
- q: 0, 1 oder 2 und
- p: 1 oder 0 sind,
oder alkylsubstituierte Dihydroxyphenylcycloalkane der Formel (IV), 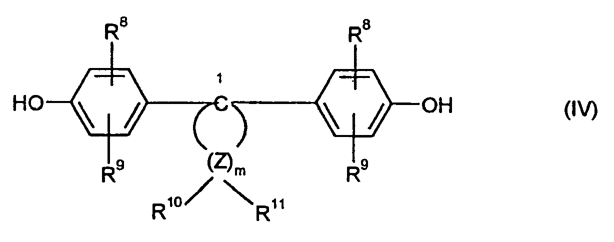 worin
- R⁸ und R⁹: unabhängig voneinander Wasserstoff, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl,
- m: eine ganze Zahl von 4, 5, 6 oder 7, bevorzugt 4 oder 5,
- R¹⁰ und R¹¹: für jedes Z individuell wählbar, unabhängig voneinander Wasserstoff oder C₁-C₆-Alkyl
- und:
- Z: Kohlenstoff bedeuten, mit der Maßgabe, daß an mindestens einem Atom Z R¹⁰ und R¹¹ gleichzeitig Alkyl bedeuten.

Geeignete Diphenole der Formel (III) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan.

Bevorzugte Diphenole der Formel (III) sind 2,2-Bis-(4-hydroxyphenyl)-propan, 2,2-und 1, 1-Bis-(4-hydroxyphenyl)-cyclohexan.

Bevorzugte Diphenole der Formel (IV) sind 1,1-Bis-(4-hydroxyphenyl)-3,3-dimethylcyclohexan, 1,1-Bis-(4-hydroxyphenyl)-3,3,5-trimethylcyclohexan und 1,1-Bis-(4-hydroxyphenyl)-2,4,4-trimethyl-cyclopentan.

Erfindungsgemäß geeignete Polycarbonate sind sowohl Homopolycarbonate als auch Copolycarbonate.

Komponente A kann auch eine Mischung der vorstehend definierten thermoplastischen Polycarbonate sein.

Polycarbonate können in bekannter Weise aus Diphenolen mit Phosgen nach dem Phasengrenzflächenverfahren oder mit Phosgen nach dem Verfahren in homogener Phase, dem sogenannten Pyridinverfahren, hergestellt werden, wobei das Molekulargewicht in bekannter Weise durch eine entsprechende Menge an bekannten Kettenabbrechern eingestellt werden kann.

Geeignete Kettenabbrecher sind z.B. Phenol, p-tert.-Butylphenol oder aber auch langkettige Alkylphenole, wie 4-(1,3-Tetramethylbutyl)-phenol gemäß DE-OS 2 842 005 oder Monoalkylphenol bzw. Dialkylphenol mit insgesamt 8 bis 20 C-Atomen in den Alkylsubstituenten gemäß deutscher Patentanmeldung P 3 506 472.2, wie 3,5-di-tert.-Butylphenol, p-iso-Octylphenol), p-tert.-Octylphenol, p-Dodecylphenol und 2-(3,5-Dimethylheptyl)-phenol und 4-(3,5-Dimethylheptyl)-phenol.

Die Menge an Kettenabbrechern beträgt im allgemeinen zwischen 0,5 und 10 Mol-%, bezogen auf die Summe der jeweils eingesetzten Diphenole der Formeln (III) und/oder (IV).

Die erfindungsgemäß geeigneten Polycarbonate A haben mittlere Molekulargewichte (M̅ _{w}, Gewichtsmittel, gemessen z.B. durch Ultrazentrifugation oder Streulichtmessung) von 10 000 bis 200 000, vorzugsweise 20 000 bis 80 000.

Die erfindungsgemäß geeigneten Polycarbonate A können in bekannter Weise verzweigt sein, und zwar vorzugsweise durch den Einbau von 0,05 bis 2 Mol-%, bezogen auf die Summe der eingesetzten Diphenole, an drei- oder mehr als dreifunktionellen Verbindungen, z.B. solchen mit drei oder mehr als drei phenolischen Gruppen.

Bevorzugte Polycarbonate sind neben dem Bisphenol-A-Homopolycarbonat die Copolycarbonate von Bisphenol A mit bis zu 60 Mol-%, bezogen auf die Mol-Summen an Diphenolen, 1,1-Bis-(4-hydroxyphenyl)-3,3,5-trimethylcyclohexan.

Die Polycarbonate A können teilweise oder vollständig durch aromatische Polyestercarbonate ersetzt werden.

In einer weiteren Ausführungsform kann das aromatische Polycarbonat A aus einem Gemisch von zwei oder mehr Polycarbonaten A.1 und A.2 mit gleicher oder verschiedener Struktur ersetzt werden, die unterschiedliche relative Lösungsviskositäten haben. Vorzugsweise haben die Polycarbonate gleiche Strukturen.

Bezogen auf das Gemisch der Polycarbonate A. 1 und A.2 beträgt der Gewichtsanteil A.1 5 bis 95, vorzugsweise 25 bis 75 Gew.-%, insbesondere 10 bis 35 Gew.-%, und der Gewichtsanteil A.2 95 bis 5, vorzugsweise 75 bis 25 Gew.-%, insbesondere 35 bis 10 Gew.-%.

Das Gemisch der Polycarbonate A.1 und A.2 zeichnet sich dadurch aus, daß die relative Lösungsviskosität von A.1 1,18 bis 1,24 beträgt, daß die relative Lösungsviskosität von A.2 1,24 bis 1,34 beträgt. Vorzugsweise ist die Differenz der relativen Lösungsviskositäten von A. 1 und A.2 größer oder gleich 0,06, insbesondere größer oder gleich 0,09, d.h. relative Lösungsviskosität (A.2) - relative Lösungsviskosität (A.1) ≥ 0,06, insbesondere ≥ 0,09. Die relative Lösungsviskosität wird gemessen in CH₂Cl₂ als Lösungsmittel bei 25°C bei einer Konzentration von 0,5 g/100 ml.

Einer der beiden Polycarbonat-Bestandteile A.1 oder A.2 im Gemisch kann ein recycliertes Polycarbonat sein. Unter recyclisiertem Polycarbonat werden solche Produkte verstanden, die bereits einen Verarbeitungs- und Lebenszyklus hinter sich haben und durch spezielle Aufarbeitungsverfahren von anhaftenden Verunreinigungen soweit befreit worden sind, so daß sie für weitere Anwendungen geeignet sind.

### Komponente B

Die Pfropfpolymerisate B umfassen z.B. Pfropfpolymerisate mit kautschukelastischen Eigenschaften, die im wesentlichen aus mindestens 2 der folgenden Monomeren erhältlich sind: Chloropren, Butadien-1,3, Isopren, Styrol, Acrylnitril, Ethylen, Propylen, Vinylacetat und (Meth-)Acrylsäureester mit 1 bis 18 C-Atomen in der Alkoholkomponente; also Polymerisate, wie sie z.B. in "Methoden der Organischen Chemie" (Houben-Weyl), Bd. 14/1, Georg Thieme-Verlag, Stuttgart 1961, S. 393-406 und in C.B. Bucknall, "Toughened Plastics", Appl. Science Publishers, London 1977, beschrieben sind. Bevorzugte Polymerisate B sind partiell vemetzt und besitzen Gelgehalte von über 20 Gew.-%, vorzugsweise über 40 Gew.-%, insbesondere über 60 Gew.-%.

Bevorzugte Pfropfpolymerisate B umfassen Pfropfpolymerisate aus:
B.1) 5 bis 95, vorzugsweise 30 bis 80 Gew.-Teile, einer Mischung aus
B.1.1) 50 bis 95 Gew.-Teilen Styrol, α-Methylstyrol, methylkernsubstituiertem Styrol, C₁-C₈-Alkylmethacrylat, insbesondere Methylmethacrylat, C₁-C₈₋Alkylacrylat, insbesondere Methylacrylat, oder Mischungen dieser Verbindungen und
B.1.2) 5 bis 50 Gew.-Teilen Acrylnitril, Methacrylnitril C₁-C₈-Alkylmethacrylaten, insbesondere Methylmethacrylat, C₁-C₈-Alkylacrylat, insbesondere Methylacrylat, Maleinsäureanhydrid, C₁-C₄-alkyl- bzw. -phenyl-N-substituierte Maleinimide oder Mischungen dieser Verbindungen auf
B.2) 5 bis 95, vorzugsweise 20 bis 70 Gew.-Teilen Polymerisat mit einer Glasübergangstemperatur unter -10°C.

Bevorzugte Pfropfpolymerisate B sind z.B. mit Styrol und/oder Acrylnitril und/oder (Meth-)Acrylsäurealkylestern gepfropfte Polybutadiene, Butadien/Styrol-Copolymerisate und Acrylatkautschuke; d.h. Copolymerisate der in der DE-OS 1 694 173 (= US-PS 3 564 077) beschriebenen Art; mit Acryl- oder Methacrylsäurealkylestern, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene, wie sie z.B. in der DE-OS 2 348 377 (= US-PS 3 919 353) beschrieben sind.

Besonders bevorzuge Pfropfpolymerisate B sind Pfropfpolymerisate, die durch Pfropfreaktion von
I. 10 bis 70, vorzugsweise 15 bis 50, insbesondere 20 bis 40 Gew.-%, bezogen auf Pfropfprodukt, mindestens eines (Meth-)Acrylsäureesters oder 10 bis 70, vorzugsweise 15 bis 50, insbesondere 20 bis 40 Gew.-% eines Gemisches aus 10 bis 50, vorzugsweise 20 bis 35 Gew.-%, bezogen auf Gemisch, Acrylnitril oder (Meth-)Acrylsäureester und 50 bis 90, vorzugsweise 65 bis 80 Gew.-%, bezogen auf Gemisch, Styrol auf
II. 30 bis 90, vorzugsweise 50 bis 85, insbesondere 60 bis 80 Gew.-%, bezogen auf Pfropfprodukt, eines Butadien-Polymerisats mit mindestens 50 Gew.-%, bezogen auf II, Butadienresten als Pfropfgrundlage.
erhältlich sind,
wobei vorzugsweise der Gelanteil der Pfropfgrundlage II mindestens 70 Gew.-% (in Toluol gemessen), der Pfropfgrad G 0,15 bis 0,55 und der mittlere Teilchendurchmesser d₅₀ des Pfropfpolymerisats B 0,05 bis 2, vorzugsweise 0,1 bis 0,6 µm, betragen.

(Meth-)Acrylsäureester I sind Ester der Acrylsäure oder Methacrylsäure und einwertiger Alkohole mit 1 bis 18 C-Atomen. Besonders bevorzugt sind Methacrylsäuremethylester, -ethylester und -propylester.

Die Pfropfgrundlage II kann neben Butadienresten bis zu 50 Gew.-%, bezogen auf II, Reste anderer ethylenisch ungesättigter Monomerer, wie Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), Vinylester und/oder Vinylether enthalten. Die bevorzugte Pfropfgrundlage II besteht aus reinem Polybutadien.

Da bei der Pfropfreaktion die Pfropfrnonomeren bekanntlich nicht unbedingt vollständig auf die Pfropfgrundlage aufgepfropft werden, werden erfindungsgemäß unter Pfropfpolymerisaten B auch solche Produkte verstanden, die durch Polymerisation der Pfropfmonomeren in Gegenwart der Pfropfgrundlage gewonnen werden.

Der Pfropfgrad G bezeichnet das Gewichtsverhältnis von aufgepfropften Pfropfmonomeren zur Pfropfgrundlage und ist dimensionslos.

Die mittlere Teilchengröße d₅₀ ist der Durchmesser, oberhalb und unterhalb dessen jeweils 50 Gew.-% der Teilchen liegen. Er kann mittels Ultrazentrifugenmessungen (W. Scholtan, H. Lange, Kolloid, Z. und Z. Polymere 250 (1972), 782-796) bestimmt werden.

Besonders bevorzugte Pfropfpolymerisate B sind z.B. auch Pfropfpolymerisate aus
(a) 20 bis 90 Gew.-%, bezogen auf B, Acrylatkautschuk mit einer Glasübergangstemperatur unter -20°C als Pfropfgrundlage und
(b) 10 bis 80 Gew.-%, bezogen auf B, mindestens eines polymerisierbaren, ethylenisch ungesättigten Monomeren, dessen bzw. deren in Abwesenheit von a) entstandenen Homo- bzw. Copolymerisate eine Glasübergangstemperatur über 25°C hätten, als Pfropfmonomere.

Die Acrylatkautschuke (a) der Polymerisate B sind vorzugsweise Polymerisate aus Acrylsäurealkylestern, gegebenenfalls mit bis zu 40 Gew.-%, bezogen auf (a), anderer polymerisierbarer, ethylenisch ungesättigter Monomerer. Zu den bevorzugten polymerisierbaren Acrylsäureestern gehören C₁-C₈-Alkylester, beispielsweise Methyl-, Ethyl-, n-Butyl-, n-Octyl- und 2-Ethylhexylester sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomeren Triallylcyanurat, Triallylisocyanurat, Trivinylcyanurat, Triacryloylhexahydro-s-triazin, Triallylbenzole.

Die Menge der vernetzenden Monomeren beträgt vorzugsweise 0,02 bis 5, insbesondere 0,05 bis 2 Gew.-%, bezogen auf Pfropfgrundlage (a).

Bei cyclischen vernetzenden Monomeren mit mindestens 3 ethylenisch ungesättigten Gruppen ist es vorteilhaft, die Menge auf unter 1 Gew.-% der Pfropfgrundlage (a) zu beschränken.

Bevorzugte "andere" polymerisierbare, ethylenisch ungesättigte Monomere, die neben den Acrylsäureestern gegebenenfalls zur Herstellung der Pfropfgrundlage (a) dienen können, sind z.B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage (a) sind Emulsionspolymerisate, die einen Gelgehalt von mindestens 60 Gew.-% aufweisen.

Weitere geeignete Pfropfgrundlagen sind Silikonkautschuke mit pfropfaktiven Stellen, wie sie in den Offenlegungsschriften DE 37 04 657, DE 37 04 655, DE 36 31 540 und DE 36 31 539 beschrieben werden.

Der Gelgehalt der Pfropfgrundlage (a) wird bei 25°C in Dimethylformamid bestimmt (M. Hoffmann, H. Krömer, R. Kuhn, Polymeranalytik I und II, Georg Thieme-Verlag, Stuttgart 1977).

Die für die bevorzugte Ausführungsform der gemeinsamen Fällung mit dem Tetrafluorethylenpolymerisat D zu verwendenden wäßrigen Dispersionen von Pfropfpolymerisat B besitzen im allgemeinen Feststoffgehalte von 25 bis 60, vorzugsweise von 30 bis 45 Gew.-%.

### Komponente C

Die erfindungsgemäßen Polymermischungen enthalten als Flammschutzmittel eine Mischung aus einer Monophosphorverbindung C. 1 und einer Phosphorverbindung C.2. Komponente C. 1 stellt eine Phosphorverbindung gemäß Formel (I) dar. 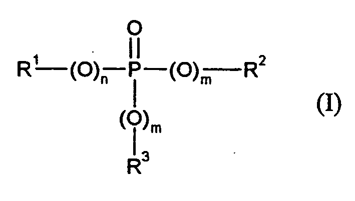 In der Formel bedeuten
- R¹, R² und R³: unabhängig voneinander C₁-C₈-Alkyl, vorzugsweise C₁-C₄-Alkyl, C₆-C₂₀-Aryl, vorzugsweise Phenyl oder Naphthyl oder C₇-C₁₂-Aralkyl, vorzugsweise Phenyl-C₁-C₄-alkyl,
- m: 0 oder 1 und
- n: 0 oder 1.

Die erfindungsgemäß geeigneten Phosphorverbindungen gemäß Komponente C.1 sind generell bekannt (s. beispielsweise Ullmanns Enzyklopädie der technischen Chemie, Bd. 18, S. 301ff, 1979; Houben-Weyl, Methoden der Organischen Chemie, Bd. 12/1, S. 43; Beilstein, Bd. 6, S. 177). Bevorzugte Substituenten R¹ bis R³ umfassen Methyl, Butyl, Octyl, Phenyl, Kresyl, Cumyl und Naphthyl. Besonders bevorzugt sind Methyl, Ethyl, Butyl, gegebenenfalls durch Methyl oder Ethyl substituiertes Phenyl.

Bevorzugte Phosphorverbindungen C.1 (Formel (I)) umfassen beispielsweise Tributylphosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, Methylphosphonsäuredimethylester, Methylphosphonsäurediphenylester, Phenylphosphonsäurediethylester, Triphenylphosphinoxid und Trikresylphosphinoxid.

Komponente C.2 stellt eine Phosphorverbindung der Formel (II) dar.

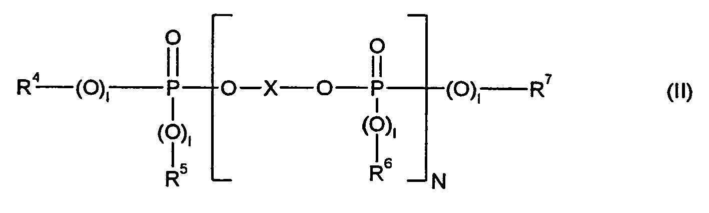

In der Formel bedeuten R⁴, R⁵, R⁶, R⁷ unabhängig voneinander C₁-C₈-Alkyl, vorzugsweise C₁-C₄-Alkyl, C₅-C₆-Cycloalkyl, C₆-C₁₀-Aryl oder C₇-C₁₂-Aralkyl, bevorzugt sind Phenyl, Naphthyl, Benzyl. Die aromatischen Gruppen R⁴, R⁵, R⁶ und R⁷ können ihrerseits mit Alkylgruppen substituiert sein. Besonders bevorzugte ArylReste sind Kresyl, Phenyl, Xylenyl, Propylphenyl oder Butylphenyl.

X in der Formel (II) bedeutet einen ein- oder mehrkernigen aromatischen Rest mit 6 bis 30 C-Atomen. Dieser leitet sich von Diphenolen ab wie z.B. Bisphenol A, Resorcin, Hydrochinon oder den in obengenannter Formel (III) beschriebenen Diphenolen.

1 in der Formel (II) kann unabhängig voneinander 0 oder 1 sein, vorzugsweise ist 1 gleich 1.

N kann Werte zwischen 1 und 5, vorzugsweise zwischen 1 und 2, einnehmen. Als erfindungsgemäße Komponente C.2 können auch Mischungen verschiedener Phosphate eingesetzt werden. In diesem Fall hat N einen Durchschnittswert zwischen 1 und 5, vorzugsweise zwischen 1 und 2.

Die erfindungsgemäßen Polymermischungen enthalten als Flammschutzmittel eine Mischung aus C.1 und C.2. Die Mengenverhältnisse von C.1 und C.2 sind dabei so zu wählen, daß eine synergistische Wirkung erzielt wird. Die Mischung besteht im allgemeinen aus 10 bis 90 Gew.-% C.1 und 90 bis 10 Gew.-% C.2 (jeweils bezogen auf C). Besonders günstige Eigenschaftsbedingungen ergeben sich im Vorzugsbereich von 12 bis 50, insbesondere 14 bis 40, ganz besonders bevorzugt 15 bis 40 Gew.-% C.1 und 88 bis 50, insbesondere 86 bis 60, ganz besonders bevorzugt 85 bis 60 Gew.-% C.2.

### Komponente D

Die fluorierten Polyolefine D sind hochmolekular und besitzen Glasübergangstemperaturen von über -30°C, in der Regel von über 100°C, Fluorgehalte, vorzugsweise von 65 bis 76, insbesondere von 70 bis 76 Gew.-%, mittlere Teilchendurchmesser d₅₀ von 0,05 bis 1000, vorzugsweise 0,08 bis 20 µm. Im allgemeinen haben die fluorierten Polyolefine D eine Dichte von 1,2 bis 2,3 g/cm³. Bevorzugte fluorierte Polyolefine D sind Polytetrafluorethylen, Polyvinylidenfluorid, Tetrafluorethylen/Hexafluorpropylen- und Ethylen/Tetrafluorethylen-Copolymerisate. Die fluorierten Polyolefine sind bekannt (vgl. "Vinyl and Related Polymers" von Schildknecht, John Wiley & Sons, Inc., New York, 1962, Seite 484-494; "Fluorpolymers" von Wall, Wiley-Interscience, John Wiley & Sons, Inc., New York, Band 13, 1970, Seite 623-654; "Modern Plastics Encyclopedia", 1970-1971, Band 47, No. 10 A, Oktober 1970, Mc Graw-Hill, Inc., New York, Seite 134 und 774; "Modern Plastics Encyclopedia", 1975-1976, Oktober 1975, Band 52, Nr. 10 A, Mc Graw-Hill, Inc., New York, Seite 27, 28 und 472 und US-PS 3 671 487, 3 723 373 und 3 838 092).

Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxidisulfat bei Drucken von 7 bis 71 kg/cm² und bei Temperaturen von 0 bis 200°C, vorzugsweise bei Temperaturen von 20 bis 100°C. (Nähere Einzelheiten s. z.B. US-Patent 2 393 967). Je nach Einsatzform kann die Dichte dieser Materialien zwischen 1,2 und 2,3 g/cm³, die mittlere Teilchengröße zwischen 0,05 und 1000 µm liegen.

Erfindungsgemäß bevorzugte fluorierte Polyolefine D sind Tetrafluorethylenpolymerisate und haben mittlere Teilchendurchmesser von 0,05 bis 20 µm, vorzugsweise 0,08 bis 10 µm, und eine Dichte von 1,2 bis 1,9 g/cm³ und werden vorzugsweise in Form einer koagulierten Mischung von Emulsionen der Tetrafluorethylenpolymerisate D mit Emulsionen der Pfropfpolymerisate B eingesetzt.

Zur Herstellung einer koagulierten Mischung aus B und D wird zuerst eine wäßrige Emulsion (Latex) eines Pfropfpolymerisates B mit mittleren Latexteilchendurchmesser von 0,05 bis 2 µm, insbesondere 0,1 bis 0,6 µm, mit einer feinteiligen Emulsion eines Tetrafluorethylenpolymerisates D in Wasser mit mittleren Teilchendurchmesser von 0,05 bis 20 µm, insbesondere von 0,08 bis 10 µm, vermischt; geeignete Tetrafluorethylenpolymerisat-Emulsionen besitzen üblicherweise Feststoffgehalte von 30 bis 70 Gew.-%, insbesondere von 50 bis 60 Gew.-%. Die Emulsionen der Pfropfpolymerisate B) besitzen Feststoffgehalte von 25 bis 50 Gew.-%, vorzugsweise von 30 bis 45 Gew.-%.

Die Mengenangabe bei der Beschreibung der Komponente B schließt den Anteil des Pfropfpolymerisats für die koagulierte Mischung aus Pfropfpolymerisat und fluorierten Polyolefinen mit ein.

In der Emulsionsmischung liegt das Gewichtsverhältnis Pfropfpolymerisat B zum Tetrafluorethylenpolymerisat D bei 95:5 bis 60:40. Anschließend wird die Emulsionsmischung in bekannter Weise koaguliert, beispielsweise durch Sprühtrocknen, Gefriertrocknung oder Koagulation mittels Zusatz von anorganischen oder organischen Salzen, Säuren, Basen oder organischen, mit Wasser mischbaren Lösemitteln, wie Alkoholen, Ketonen, vorzugsweise bei Temperaturen von 20 bis 150°C, insbesondere von 50 bis 100°C. Falls erforderlich, kann bei 50 bis 200°C, bevorzugt 70 bis 100°C, getrocknet werden.

Geeignete Tetrafluorethylenpolymerisat-Emulsionen sind handelsübliche Produkte und werden beispielsweise von der Firma DuPont als Teflon® 30 N angeboten.

Geeignete, in Pulverform einsetzbare fluorierte Polyolefine D sind Tetrafluorethylenpolymerisate mit mittleren Teilchendurchmesser von 100 bis 1000 µm und Dichten von 2,0 g/cm³ bis 2,3 g/cm3. Geeignete Tetrafluorethylenpolymerisat-Pulver sind handelsübliche Produkte und werden beispielsweise von der Fa. DuPont unter dem Handelsnamen Teflon® angeboten.

Die erfindungsgemäßen Formmassen enthalten als komponente E) mindestens einen Zusatzstoff ausgewählt aus der Gruppe der Gleit- und Entformungsmittel, Nukleiermittel, Antistatika, Stabilisatoren, Füll- und Verstärkungsstoffe sowie Farbstoffe und Pigmente.

Die gefüllten bzw. verstärkten Formmassen können bis zu 60, vorzugsweise 10 bis 40 Gew.-%, bezogen auf die gefüllte bzw. verstärkte Formmasse, Füll- und/oder Verstärkungsstoffe enthalten. Bevorzugte Verstärkungsstoffe sind Glasfasern. Bevorzugte Füllstoffe, die auch verstärkend wirken können, sind Glaskugeln, Glimmer, Silikate, Quarz, Talkum, Titandioxid, Wollastonit.

Die erfindungsgemäßen Formmassen, bestehend aus den Komponenten A bis E werden hergestellt, indem man die jeweiligen Bestandteile in bekannter Weise vermischt und bei Temperaturen von 200°C bis 330°C in üblichen Aggregaten wie Innenknetern, Extrudern und Doppelwellenschnecken schmelzcompoundiert oder schmelzextrudiert.

Gegenstand der vorliegenden Erfindung ist somit auch ein Verfahren zur Herstellung von thermoplastischen Formmassen, bestehend aus den Komponenten A bis E, das dadurch gekennzeichnet ist, daß man die Komponenten A bis E nach erfolgter Vermischung bei Temperaturen von 200 bis 330°C in gebräuchlichen Aggregaten schmelzcompoundiert oder schmelzextrudiert, wobei die Komponente D vorzugsweise in Form einer koagulierten Mischung mit der Komponente B eingesetzt wird.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind: Gehäuseteile jeder Art, z.B. für Haushaltsgeräte, wie Saftpressen, Kaffeemaschinen, Mixer, für Büromaschinen, wie Monitore oder Drucker oder Abdeckplatten für den Bausektor und Teile für den Kfz-Sektor. Sie werden außerdem auf dem Gebiet der Elektrotechnik eingesetzt, weil sie sehr gute elektrische Eigenschaften haben.

Besonders geeignet sind die Formmassen zur Herstellung von dünnwandigen Formteilen (z.B. Datentechnik-Gehäuseteile), wo besonders hohe Ansprüche an Kerbschlagzähigkeit, Fließnahtfestigkeit und Flammwidrigkeit der eingesetzten Kunststoffe gestellt werden.

Eine weitere Form der Verarbeitung ist die Herstellung von Formkörpern durch Blasformen oder durch Tiefziehen aus vorher hergestellten Platten oder Folien.

### Beispiele

### Komponente A.1

Polycarbonat auf Basis Bisphenol A mit einer relativen Lösungsviskosität von 1,26 bis 1,28 gemessen in Methylenchlorid bei 25°C und einer Konzentration von 0,5 g/100 ml.

### Komponente A.2

Polycarbonat auf Basis Bisphenol A mit einer relativen Lösungsviskosität von 1,195 bis 1,205 gemessen in Methylenchlorid bei 25°C und einer Konzentration von 0,5 g/100 ml.

### Komponente A.3

Polycarbonat auf Basis Bisphenol A mit einer relativen Lösungsviskosität von 1,305 bis 1,315 gemessen in Methylenchlorid bei 25°C und einer Konzentration von 0,5 g/100 ml.

### Komponente A.4

Polycarbonat auf Basis Bisphenol A mit einer relativen Lösungsviskosität von 1,235 bis 1,245 gemessen in Methylenchlorid bei 25°C und einer Konzentration von 0,5 g/100 ml.

### Komponente B

Pfropfpolymerisat von 40 Gew.-Teilen Styrol und Acrylnitril im Verhältnis 73:27 auf 60 Gew.-Teile teilchenförmigen vemetzten Polybutadienkautschuk (mittlerer Teilchendurchmesser d₅₀ = 0,3 µm), hergestellt durch Emulsionspolymerisation.

### Komponente C

C.1) Triphenylphosphat (Disflamoll® TP der Firma Bayer AG)
C.2) m-Phenylen-bis(di-phenyl-phosphat) (Fyroflex RDP der Firma Akzo)

### Komponente D

Tetrafluorethylenpolymerisat (Teflon® der Firma DuPont) als koagulierte Mischung aus einer Pfropfpolymerisat-Emulsion B in Wasser und einer Tetrafluorethylenpolymerisat-Emulsion in Wasser. Das Gewichtsverhältnis Pfropfpolymerisat B) zum Tetrafluorethylenpolymerisat D in der Mischung ist 90 Gew.-% zu 10 Gew.-%. Die Tetrafluorethylenpolymerisat-Emulsion besitzt einen Feststoffgehalt von 60 Gew.-%, der mittlere Teilchendurchmesser liegt zwischen 0,05 und 0,5 µm. Die SAN-Pfropfpolymerisat-Emulsion besitzt einen Feststoffgehalt von 34 Gew.-% und einen mittleren Latexteilchendurchmesser von 0,3 µm.

### Herstellung der koagulierten Mischung

Die Emulsion des Tetrafluorethylenpolymerisats (Teflon® 30 N der Fa. DuPont) wird mit der Emulsion des Pfropfpolymerisats B vermischt und mit 1,8 Gew.-%, bezogen auf Polymerfeststoff, phenolischer Antioxidantien stabilisiert. Bei 85 bis 95°C wird die Mischung mit einer wäßrigen Lösung von MgSO₄ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100°C zu einem Pulver getrocknet. Dieses Pulver kann dann mit den weiteren Komponenten in den beschriebenen Aggregaten compoundiert werden.

### Herstellung und Prüfung der erfindungsgemäßen Formmassen

Das Mischen der Komponenten A bis D erfolgt auf einem 3-1-Innenkneter. Die Massetemperatur ist 220-240°C.

Von den Formmassen werden auf einer Spritzgußmaschine Stäbe der Abmessung 80 x 10 x 4 mm³ (Verarbeitungstemperatur 260°C) hergestellt, an denen sowohl die Messung der Kerbschlagzähigkeit bei Raumtemperatur (nach Methode ISO 180 1A) als auch die Wärmeformbeständigkeit nach Vicat B gemäß DIN 53 460 erfolgt.

Zur Ermittlung der Fließnahtfestigkeit aₙF wird die Schlagzähigkeit nach DIN 53 453 an der Bindenaht von beidseitig ausgespritzten Prüfkörpern (Verarbeitungstemperatur: 260°C) der Dimension 170 x 10 x 4 mm gemessen.

Das Brandverhalten der Proben wurde nach UL-Subj. 94 V an Stäben der Abmessung 127 x 12,7 x 1,6 mm gemessen, hergestellt auf einer Spritzgußmaschine bei 260°C.

### Der UL 94 V-Test wird wie folgt duchgeführt:

Substanzproben werden zu Stäben der Abmessungen 127 x 12,7 x 1,6 mm geformt. Die Stäbe werden vertikal so montiert, daß die Unterseite des Probekörpers sich 305 mm über einen Streifen Verbandstoff befindet. Jeder Probestab wird einzeln mittels zweier aufeinanderfolgender Zündvorgänge von 10 s Dauer entzündet, die Brenneigenschaften nach jedem Zündvorgang werden beobachtet und danach die Probe bewertet. Zum Entzünden der Probe wird ein Bunsenbrenner mit einer 10 mm (3,8 inch) hohen blauen Flamme von Erdgas mit einer Wärmeeinheit von 3,73 x 10⁴ kJ/m³ (1000 BUT per cubic foot) benutzt.

Die UL 94 V-O-Klassifizierung umfaßt die nachstehend beschriebenen Eigenschaften von Materialien, die gemäß der UL 94 V-Vorschrift geprüft werden. Die Formmassen in dieser Klasse enthalten keine Proben, die länger als 10 s nach jeder Einwirkung der Testflamme brennen; sie zeigen keine Gesamtflammzeit von mehr als 50 s bei der zweimaligen Flammeinwirkung auf jeden Probesatz; sie enthalten keine Proben, die vollständig bis hinauf zu der am oberen Ende der Probe befestigten Halteklammer abbrennen; sie weisen keine Proben auf, die die unterhalb der Probe angeordnete Watte durch brennende Tropfen oder Teilchen entzünden; sie enthalten auch keine Proben, die länger als 30 s nach Entfernen der Testflamme glimmen.

Andere UL 94-Klassifizierungen bezeichnen Proben, die weniger flammwidrig oder weniger selbstverlöschend sind, weil sie flammende Tropfen oder Teilchen abgeben. Diese Klassifizierungen werden mit UL 94 V-1 und V-2 bezeichnet. N.B. heißt "nicht bestanden" und ist die Klassifizierung von Proben, die eine Nachbrennzeit von ≥ 30 s aufweisen.

Eine Zusammenstellung der Eigenschaften der erfindungsgemäßen Formmassen ist in den nachfolgenden Tabellen 1 und 2 gegeben:

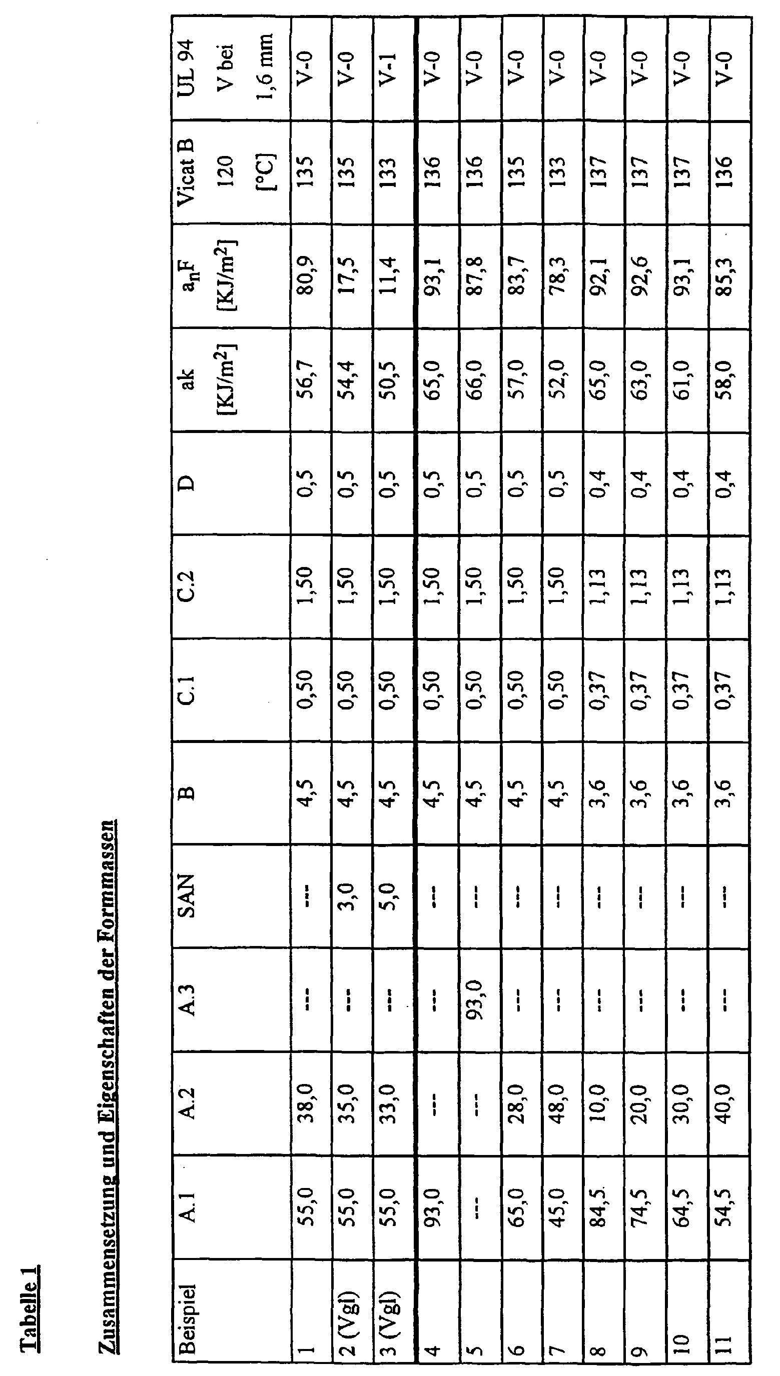

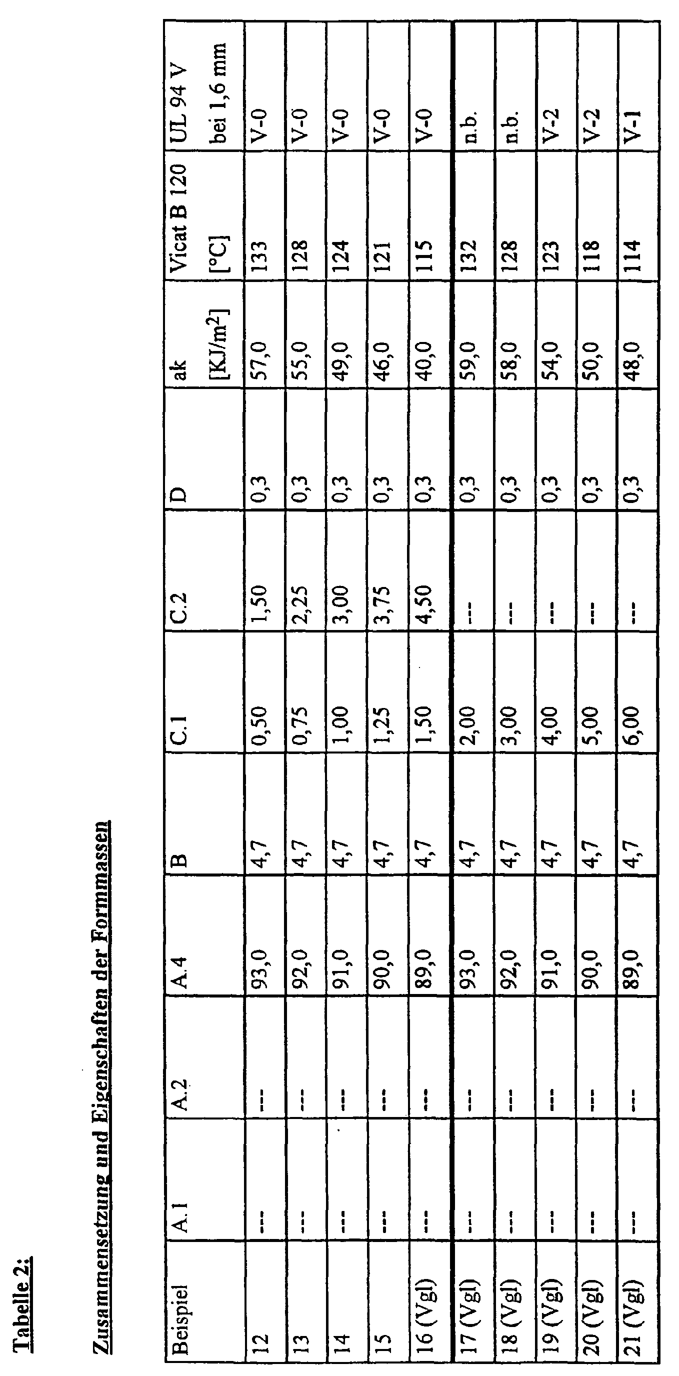

Die erfindungsgemäßen Formmassen zeigen eine sehr vorteilhafte Eigenschaftskombination aus hoher Wärmeformbeständigkeit, guten mechanischen Eigenschaften wie Kerbschlagzähigkeit und Fließnahtfestigkeit und einer exzellenten Flammwidrigkeit (V-0 bei 1,6 mm gemäß UL-94 V).

Ein Zusatz von Styrolcopolymeren führt zu einen geringen Abfall der Wärmeformbeständigkeit und Kerbschlagzähigkeit und einem drastischen Abfall der Fließnahtfestigkeit.

Eine Erhöhung der Flammschutzmittelmenge zeigt sich in einem starken Rückgang der Wärmeformbeständigkeit.

Wird ein Monophosphat alleine, d.h. ohne Oligophosphat eingesetzt, erreicht der Flammschutz nicht das hohe Niveau wie bei den erfindungsgemäßen Beispielen.

## Patentansprüche

1. Flammwidrige, thermoplastische Formmassen bestehend aus
A) 70 bis 98 Gew.-Teile eines aromatischen Polycarbonats,
B) 0,5 bis 20 Gew.-Teile eines Pfropfpolymerisats,
C) 0,5 bis 4 Gew.-Teile einer Mischung aus
C.1) 10 bis 90 Gew.-%, bezogen auf C, einer Monophosphorverbindung der Formel (I) 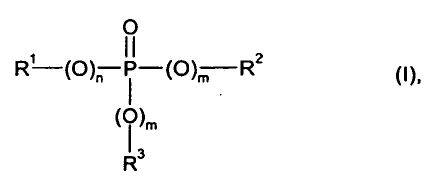 worin
R¹, R² und R³ unabhängig voneinander C₁-C₈-Alkyl, C₆-C₂₀-Aryl oder C₇-C₁₂-Aralkyl,
m 0 oder 1 und
n 0 oder 1 bedeuten und
C.2) 90 bis 10 Gew.-%, bezogen auf C, einer Phosphorverbindung der Formel (II) 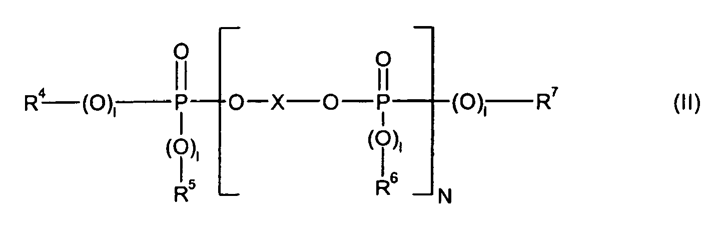 worin
R⁴, R⁵, R⁶, R⁷ unabhängig voneinander C₁-C₈-Alkyl, C₅-C₆₋Cycloalkyl, C₆-C₁₀-Aryl oder C₇-C₁₂-Aralkyl,
1 unabhängig voneinander 0 oder 1,
N 1 bis 5 und
X einen ein- oder mehrkernigen aromatischen Rest mit 6 bis 30 C-Atomen bedeuten
D) 0,05 bis 5 Gew.-Teile eines fluorierten Polyolefins mit einem mittleren Teilchendurchmesser von 0,05 bis 1000 µm, einer Dichte von 1,2 bis 2,3 g/cm³ und einem Fluorgehalt von 65 bis 76 Gew.-%, und
E) mindestens einen Zusatzstoff ausgewählt aus der Gruppe der Stabilisatoren, Farbstoffe, Pigmente, Gleit- und Entformungsmittel, Füll- und Verstärkungsmittel, Nukleiermittel und Antistatika.

2. Formmassen gemäß Anspruch 1, enthaltend 75 bis 98 Gew.-Teile eines aromatischen Polycarbonats A.

3. Formmassen gemäß Anspruch 1, enthaltend Pfropfpolyermisate B hergestellt durch Copolymerisation von
5 bis 95 Gew.-Teilen einer Mischung aus
50 bis 95 Gew.-Teilen Styrol, α-Methylstyrol, alkylkemsubstituiertem Styrol, C₁-C₈-Alkylmethacrylat, C₁-C₈-Alkylacrylat oder Mischungen dieser Verbindungen und
5 bis 50 Gew.-Teilen Acrylnitril, Methacrylnitril, C₁-C₈-Alkylmethacrylat, C₁-C₈-Alkylacrylat, Maleinsäureanhydrid, C₁-C₄-alkyl- bzw. phenyl-N-substituiertem Maleinimid oder Mischungen dieser Verbindungen auf
5 bis 95 Gew.-Teile Kautschuk mit einer Glasübergangstemperatur unter -10°C.

4. Formmassen gemäß Anspruch 3, enthaltend als,Kautschuke Dienkautschuke, Acrylatkautschuke, Silikonkautschuke oder Ethylen-Propylen-Dien-Kautschuke.

5. Formmassen gemäß Anspruch 1, enthaltend als Komponente C eine Mischung aus 12 bis 50 Gew.-% C.1 und 50 bis 88 Gew.-% C.2.

6. Formmassen gemäß Anspruch 1, enthaltend als Komponente C.1 Triphenylphosphat.

7. Formmassen gemäß Anspruch 1, enthaltend als Komponente C.2 ein oligomeres Phosphat, bei dem R⁴, R⁵, R⁶ und R⁷ Phenylgruppen und X eine Phenylengruppe darstellt.

8. Formmassen gemäß Anspruch 7, wobei X eine Bisphenylisopropylidengruppe darstellt.

9. Formmassen gemäß Anspruch 1, wobei Komponente D in Form einer koagulierten Mischung mit der Komponente B eingesetzt wird.

10. Verwendung der Formmassen gemäß Anspruch 1 zur Herstellung von Formkörpern.

## Claims

1. Flame resistant, thermoplastic moulding compositions consisting of
A) 70 to 98 parts by weight of an aromatic polycarbonate,
B) 0.5 to 20 parts by weight of a graft polymer,
C) 0.5 to 4 parts by weight of a mixture of
C.1) 10 to 90 wt.%, based on C, of a monophosphorus compound of formula (I) 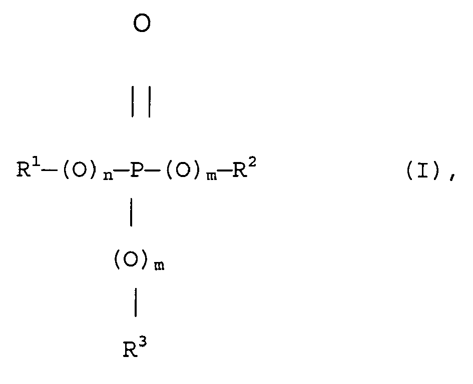 where
R¹, R² and R³, independently of one another, signify C₁-C₈-alkyl, C₆-C₂₀-aryl or C₇-C₁₂₋aralkyl,
m signifies 0 or 1 and
n signifies 0 or 1 and
C.2) 90 to 10 wt.%, based on C, of a phosphorus compound of formula (II) 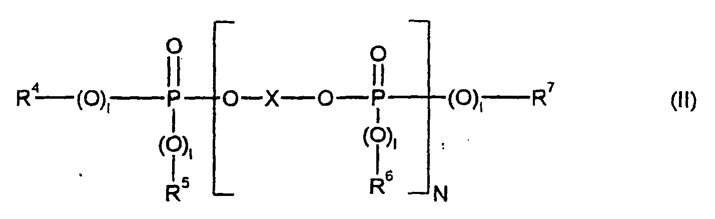 where
R⁴, R⁵, R⁶, R⁷, independently of one another, signify C₁-C₈-alkyl, C₅-C₆-cycloalkyl, C₆-C₁₀₋aryl or C₇-C₁₂-aralkyl,
I independently of one another, signifies 0 or 1,
N signifies 1 to 5 and
X signifies a mononuclear or polynuclear aromatic radical with 6 to 30 C atoms
D) 0.05 to 5 parts by weight of a fluorinated polyolefin with an average particle diameter of 0.05 to 1000 µm, a density of 1.2 to 2.3 g/cm³ and a fluorine content of 65 to 76 wt.% and
E) at least one additive selected from the group of stabilisers, dyes, pigments, lubricants and mould release agents, fillers and reinforcing agents, nucleating agents and antistatic agents.

2. Moulding compositions according to claim 1, containing 75 to 98 parts by weight of an aromatic polycarbonate A.

3. Moulding compositions according to claim 1, containing graft polymers B) produced by copolymerisation of
5 to 95 parts by weight of a mixture of
50 to 95 parts by weight of styrene, α-methyl styrene, styrene with alkyl substitution in the ring, C₁-C₈₋alkyl methacrylate, C₁-C₈-alkyl acrylate or mixtures of these compounds and
5 to 50 parts by weight of acrylonitrile, methacrylonitrile, C₁-C₈-alkyl methacrylate, C₁-C₈₋alkyl acrylate, maleic anhydride, C₁-C₄-alkyl- or phenyl-N-substituted maleimide or mixtures of these compounds on
5 to 95 parts by weight of rubber with a glass transition temperature of less than -10°C.

4. Moulding compositions according to claim 3, containing as rubbers diene rubbers, polyacrylate rubbers, silicone rubbers or ethylene-propylene-diene rubbers.

5. Moulding compositions according to claim 1, containing as component C a mixture of 12 to 50 wt.% C.1 and 50 to 88 wt.% C.2.

6. Moulding compositions according to claim 1, containing as component C.1 triphenyl phosphate.

7. Moulding compositions according to claim 1, containing as component C.2 an oligomeric phosphate in which R⁴, R⁵, R⁶ and R⁷ represent phenyl groups and X represents a phenylene group.

8. Moulding compositions according to claim 7, wherein X represents a bisphenylisopropylidene group.

9. Moulding compositions according to claim 1, wherein component D is used in the form of a coagulated mixture with component B.

10. Use of the moulding compositions according to claim 1 for the production of mouldings.

## Revendications

1. Masses moulées thermoplastiques résistantes au feu, constituées de
A) 70 à 98 parties en poids d'un polycarbonate aromatique,
B) 0,5 à 20 parties en poids d'un polymère greffé,
C) 0,5 à 4 parties en poids d'un mélange de
C.1) 10 à 90 % en poids, par rapport à C, d'un composé monophosphorique de formule (I) 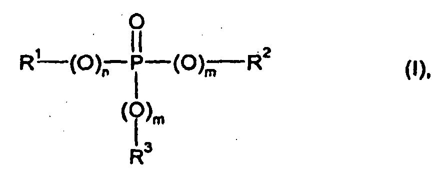 dans laquelle
R¹, R² et R³ représentent, indépendamment les uns des autres, un groupe alkyle en C₁ à C₈, aryle en C₆ à C₂₀ ou aralkyle en C₇ à C₁₂,
m est égal à 0 ou 1 et
n est égal à 0 ou 1 et
C.2) 90 à 10 % en poids, par rapport à C, d'un composé phosphorique de formule (II) 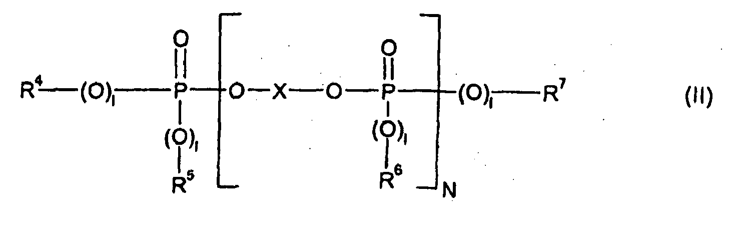 dans laquelle
R⁴, R⁵, R⁶, R⁷ représentent, indépendamment les uns des autres, un groupe alkyle en C₁ à C₈, cycloalkyle en C₅ à C₆, aryle en C₆ à C₁₀ ou aralkyle en C₇ à C₁₂,
1 est, indépendamment, égal à 0 ou 1 et
N est égal à 1 ou 5 et
X représente un radical aromatique à un ou plusieurs noyaux ayant de 6 à 30 atomes de carbone
D) 0,05 à 5 parties en poids d'une polyoléfine fluorée ayant un diamètre moyen de particules de 0,05 à 1000 µm, une densité de 1,2 à 2,3 g/cm³ et une teneur en fluor de 65 à 76 % en poids et
E) au moins un additif choisi dans le groupe constitué par les stabilisateurs, colorants, pigments, agents de glissement et de démoulage, charges et agents renforçateurs, agents nucléants et antistatiques.

2. Masses moulées selon la revendication 1, contenant 75 à 98 % en poids d'un polycarbonate aromatique A.

3. Masses moulées selon la revendication 1, contenant des polymères greffés B fabriqués par copolymérisation de :
5 à 95 parties en poids d'un mélange de
50 à 95 parties en poids de styrène, d'α-méthylstyrène, de styrène substitué par des radicaux alkyles, de méthacrylate d'alkyle en C₁ à C₈, d'acrylate d'alkyle en C₁ à C₈, ou de mélanges de ces composés et
5 à 50 parties en poids d'acrylonitrile, de méthacrylonitrile, de méthacrylate d'alkyle en C₁ à C₈, d'acrylate d'alkyle en C₁ à C₈, d'anhydride d'acide maléique, de maléinimide N-substitué par un groupe alkyle en C₁ à C₄ ou phényle, ou des mélanges de ces composés sur
5 à 95 parties en poids de caoutchouc ayant une température de transition vitreuse en dessous de -10°C.

4. Masses moulées selon la revendication 3, contenant comme caoutchoucs des caoutchoucs de diène, des caoutchoucs d'acrylate, des caoutchoucs de silicone ou des caoutchoucs d'éthylène - propylène - diène.

5. Masses moulées selon la revendication 1, contenant comme composant C un mélange de 12 à 50 % en poids de C.1 et 50 à 88 % en poids de C2.

6. Masses moulées selon la revendication 1, contenant comme composant C.1. du triphénylphosphate.

7. Masses moulées selon la revendication 1, contenant comme composant C.2 un phosphate oligomère, dans lequel R⁴, R⁵, R⁶ et R⁷ représentent des groupes phényles et X représente un groupe phénylène.

8. Masses moulées selon la revendication 7, dans lesquelles X représente un groupe bisphénylisopropylidène.

9. Masses moulées selon la revendication 1, dans lesquelles le composant D est mis en oeuvre sous la forme d'un mélange coagulé avec le composant B.

10. Utilisation des masses moulées selon la revendication 1 pour la fabrication de corps moulés.
